# EUROPÄISCHE PATENTSCHRIFT

(11) **EP 0 975 876 B1**
(45) Veröffentlichungstag und Bekanntmachung des Hinweises auf die Patenterteilung: **12.06.2002**
(21) Anmeldenummer: 98919144.0
(22) Anmeldetag: 25.03.1998
(51) Int. Cl.: F16B 7/06

(54) **STABANKER FÜR ZUGSTÄBE**
TENSION ROD ANCHORING
ANCRAGE POUR TIRANTS

(30) Priorität: 14.04.1997 DE 29706509 U
(43) Veröffentlichungstag der Anmeldung: 02.02.2000
(73) Patentinhaber: Deha Ankersysteme GmbH & Co. KG, 64521 Gross-Gerau (DE)
(72) Erfinder: ERNST, Peter, D-65795 Hattersheim (DE)
(74) Vertreter: Riedel, Peter, Dipl.-Ing.
(86) Internationale Anmeldenummer: EP9801739
(87) Internationale Veröffentlichungsnummer: WO9846890

(56) Entgegenhaltungen:
- DE-A- 1 575 139
- DE-C- 3 922 070
- DE-U- 8 602 266
- FR-A- 2 130 020
- US-A- 5 221 113

## Beschreibung

Die Erfindung betrifft einen Stabanker für Zugstäbe mit einem Ankerkopf mit einer Gewindebohrung, in die ein mit einem Außengewinde versehenes Zugstabende eines Zugstabes einschraubbar ist.

Derartige Stabanker sind bekannt (EP 0 480 957 B1). Der Ankerkopf weist hierbei üblicherweise zwei parallele Augenlaschen auf, deren Bohrungen zur Aufnahme eines Augenbolzens dienen. Als Stabanker sollen in diesem Zusammenhang aber auch Verbindungsmuffen oder Spannschlösser verstanden werden, die zur Verbindung zweier mit Außengewinde versehener Zugstäbe dienen. In der Praxis hat sich gezeigt, daß im Bereich der Gewindeverbindung zwischen dem Zugstab und dem Ankerkopf Korrosion auftreten kann.

Bei einer bekannten Schraubverbindung (DE-U-8 602 266) zwischen einem Ankerkopf und einem als Rohr ausgeführten Zugstab ist der mit Außengewinde versehene Ankerkopf in ein Innengewinde des Zugstabes eingeschraubt. Eine auf das Außengewinde des Ankerkopfes aufgeschraubte Dichtmutter weist eine innen liegende Dichtung auf, die an der glattzylindrischen Außenfläche des rohrförmigen Zugstabes dichtend anliegt. Dadurch wird zwar eine Abdichtung gegen das Eindringen von Feuchtigkeit zwischen der Dichtmutter und dem rohrförmigen Zugstab erreicht; der Gewindebereich zwischen der Dichtmutter und dem Ankerkopf ist jedoch nicht gegen das Eindringen von Feuchtigkeit abgedichtet. Für den Einsatz bei Ankerköpfen mit einer Gewindebohrung, in die ein mit Außengewinde versehenes Zugstabende eingeschraubt ist, ist diese bekannte Konstruktion nicht vorgesehen.

Aufgabe der Erfindung ist es daher, einen Stabanker der eingangs genannten Gattung so auszubilden, daß mit konstruktiv einfachen Mitteln eine Korrosion im Bereich der Verbindung zwischen dem Zugstab und dem Ankerkopf verhindert wird.

Diese Aufgabe wird erfindungsgemäß durch einen Stabanker mit den Merkmalen des Kennzeichnenden Teils des Patentanspruchs 1 gelöst.

Auf diese Weise wird eine allseitige Abdichtung des korrösionsgefährdeten Bereichs der Gewindeverbindung zwischen dem Zugstab und dem Ankerkopf erreicht. Der Einsatz einer gesonderten Dichtmutter zur Abdichtung gegenüber dem Zugstab bewirkt, daß dieser besonders kritische und wichtige Dichtungsabschnitt in den Bereich der glattzylindrischen Außenfläche des Zugstabes verlegt werden kann und damit außerhalb des Außengewindes des Zugstabendes liegt, da eine wirksame Abdichtung im Gewindebereich nicht möglich ist.

Die weiteren Dichtungsmaßnahmen im Bereich zwischen der Dichtmutter und dem Ankerkopf bzw. am inneren Ende der Gewindebohrung des Ankerkopfes sorgen dafür, daß auch an diesen Stellen keine Feuchtigkeit eindringen kann, so daß die Gewindeverbindung zwischen dem Zugstab und dem Ankerkopf allseitig vollständig dicht abgeschlossen ist und somit das Eindringen von Feuchtigkeit und damit eine Korrosionsbildung ausgeschlossen sind.

Gemäß einer bevorzugten Ausführungsform der Erfindung erfolgt die Festlegung der Dichtmutter in besonders einfacher Weise dadurch, daß die Dichtmutter als Kontermutter ausgeführt und mit einem Mutterinnengewinde auf das Außengewinde des Zugstabs aufgeschraubt ist und daß die Stabdichtung in einem an das Mutterinnengewinde anschließenden Mutterfortsatz angeordnet ist.

Die Ausbildung der Dichtmutter als Kontermutter dient nicht nur zur einfachen und wirksamen Festlegung der Dichtmutter, sondern auch zur Sicherung der Gewindeverbindung zwischen dem Zugstab und dem Ankerkopf.

Gemäß einer anderen Ausgestaltung des Erfindungsgedankens erfolgt die Festlegung der Dichtmutter dadurch, daß sie auf ein Außengewinde des Ankerkopfes aufgeschraubt ist.

Weitere vorteilhafte Ausgestaltungen des Erfindungsgedankens sind Gegenstand weiterer Unteransprüche.

Nachfolgend werden Ausführungsbeispiele der Erfindung näher erläutert, die in der Zeichnung dargestellt sind. Es zeigt:
Fig. 1 einen Stabanker für Zugstäbe in einer Seitenansicht,
Fig. 2 einen Schnitt längs der Linie II-II in Fig. 1 und
Fig. 3 und 4 Schnittdarstellungen entsprechend der Fig. 2 von abgewandelten Ausführungsformen eines Stabankers,
wobei in den Fig. 2-4 der Zugstab in der oberen bzw. unteren Bildhälfte jeweils unterschiedlich tief eingeschraubt dargestellt ist.

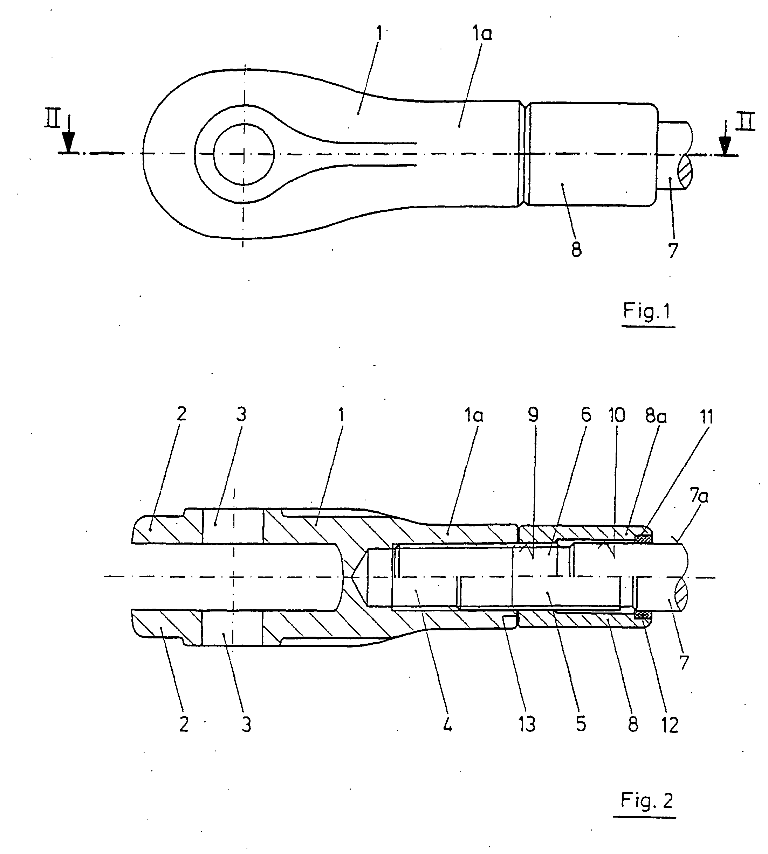

Der in den Fig. 1 und 2 gezeigte Stabanker weist einen Ankerkopf 1 auf, der bei dem dargestellten Ausführungsbeispiel gabelförmig ausgeführt ist und zwei parallel und im Abstand zueinander angeordnete Augenlaschen 2 mit jeweils einer Bohrung 3 aufweist, die zur Aufnahme eines (nicht dargestellten) Augenbolzens zur Verbindung mit einem ebenfalls nicht dargestellten Augenstab dienen. Ein hülsenartiger Abschnitt 1a des Ankerkopfes 1 weist eine Gewindebohrung 4 auf, in die ein mit einem Außengewinde 5 versehenes Zugstabende 6 eines Zugstabes 7 eingeschraubt ist.

Bei dem in Fig. 2 gezeigten Ausführungsbeispiel ist die Gewindebohrung 4 als Sacklochbohrung ausgeführt und somit verschlossen. An das mit dem Außengewinde 5 versehene Zugstabende 6 schließt sich der Hauptabschnitt des Zugstabes 7 mit glattzylindrischer Außenfläche 7a an.

Stirnseitig vor dem Abschnitt 1a des Ankerkopfes 1 ist eine Dichtmutter 8 angeordnet, die beim Ausführungsbeispiel nach den Fig. 1 und 2 als Kontermutter ausgeführt ist. Die Dichtmutter 8 weist in ihrer Bohrung an dem dem Ankerkopf 1 zugekehrten Ende ein Mutterinnengewinde 9 auf, das auf das Außengewinde 5 des Zugstabes 7 aufgeschraubt ist. An das Mutterinnengewinde 9 schließt sich in axialer Richtung ein Mutterfortsatz 8a an, der bei dem dargestellten Beispiel eine Bohrung 10 aufweist, deren Durchmesser größer als der des Außengewindes 5 und des Zugstabes 7 ist.

Wie in Fig. 2 gezeigt, ist an dem dem Mutterinnengewinde 9 abgekehrten Ende des Mutterfortsatzes 8a in einem Bohrungsabsatz 11 ein Flachdichtring 12 eingelegt. Dieser elastische. Dichtring 12 dichtet gegenüber der glattzylindrischen Außenfläche 7a des Zugstabes 7 ab.

Zwischen den einander zugekehrten Stirnseiten des Ankerkopfes 1 und der Kontermutter 8 ist eine Schicht 13 aus einem Dichtungslack angeordnet, beispielsweise einem Gummilack, die unter der Wirkung des Anpreßdrucks dichtet. Auf diese Weise ist der Bereich der Gewindeverbindung zwischen dem Zugstab 7 und dem Ankerkopf 1 nach allen Richtungen abgedichtet, so daß das Eindringen von Feuchtigkeit und somit das Entstehen von Korrosion verhindert wird. Da der Dichtring 12 an der glatten Außenfläche 7a anliegt, bleibt die Dichtwirkung unabhängig von der jeweils gewählten Einschraubtiefe des Zugstabes 7 erhalten.

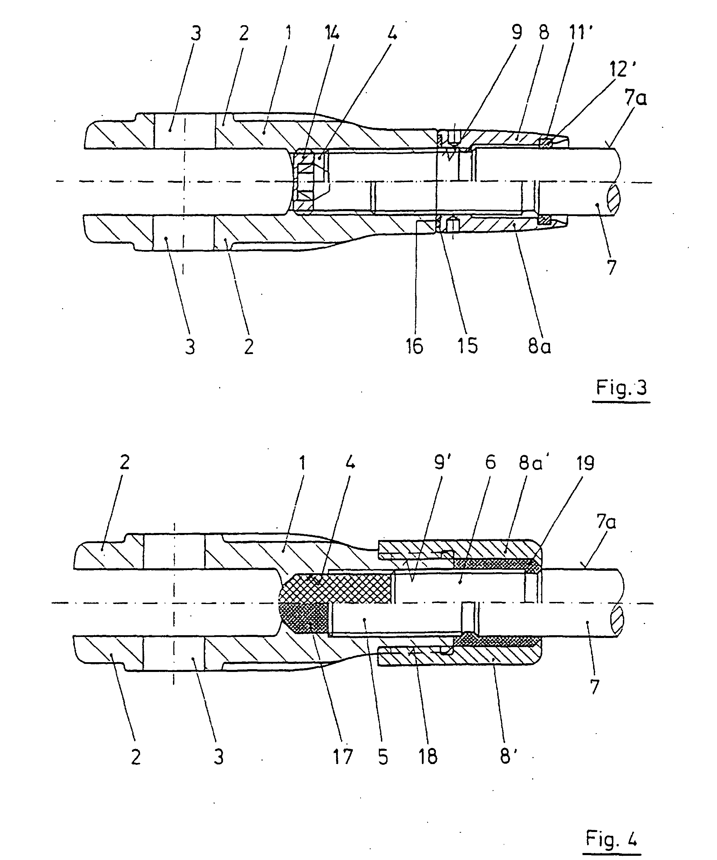

Das Ausführungsbeispiel nach Fig. 3 unterscheidet sich von dem vorher beschriebenen Ausführungsbeispiel zunächst dadurch, daß die Gewindebohrung 4 nicht als Sacklochbohrung ausgeführt ist, sondern bis in den Bereich zwischen den Augenlaschen 2 reicht. Die Gewindebohrung 4 ist mit einer am Gewindeauslauf angeordneten Dichtscheibe 14 aus Kunststoff dicht verschlossen.

In einer stirnseitigen Ringausnehmung 15 der Kontermutter 8 ist ein Dichtring 16 angeordnet, der gegen die Stirnseite des Ankerkopfes 1 abdichtet. Stattdessen kann die Ringausnehmung 15 auch in der Stirnseite des Ankerkopfes 1 angeordnet sein.

Ähnlich wie beim Ausführungsbeispiel nach Fig. 2 ist nahe dem äußeren Ende des Mutterfortsatzes 8a ein elastischer Dichtring angeordnet. In diesem Fall handelt es sich um einen O-Dichtring 12', der in einer Dichtungsnut 11' aufgenommen ist und an der glattzylindrischen Außenfläche 7a des Zugstabes 7 abdichtet.

Beim Ausführungsbeispiel nach Fig. 4 ist die Gewindebohrung 4 des Ankerkopfes 1 an ihrem inneren Ende durch einen stirnseitig vor dem Zugstabende 6 angeordneten verformbaren elastischen Dichtstopfen 17 verschlossen. Ein wesentlicher Unterschied der Ausführung nach Fig. 4 gegenüber den vorher beschriebenen Ausführungen besteht darin, daß die Dichtmutter 8' hierbei nicht als Kontermutter, sondern als Überwurfmutter ausgeführt ist, die auf ein Außengewinde 18 des Ankerkopfes 1 aufgeschraubt ist. Auch hierbei weist die Dichtmutter 8' im Anschluß an ihr Mutterinnengewinde 9' einen hülsenartigen Mutterfortsatz 8a' auf, der die Stabdichtung aufnimmt. Die Stabdichtung ist hierbei eine elastische Quetschdichtung 19, die den Raum zwischen dem Mutterfortsatz 8a' und dem Zugstab 7 ausfüllt. Die Gewindeverbindung 9'/18 zwischen der Dichtmutter 8' und dem Ankerkopf 1 ist vorzugsweise als dichtendes Rundgewinde ausgeführt, so daß auch hierbei - ebenso wie bei den Ausführungen nach den Fig. 2 bzw. 3 - eine vollständige Abdichtung der Gewindeverbindung des Zugstabes 7 mit dem Ankerkopf 1 erreicht wird.

## Patentansprüche

1. Stabanker für Zugstäbe (7) mit einem Ankerkopf (1) mit einer Gewindebohrung (4), in die ein mit einem Außengewinde (5) versehenes Zugstabende (6) eines Zugstabes (7) einschraubbar ist, **dadurch gekennzeichnet, dass** eine stirnseitig an den Ankerkopf (1) anschließende Dichtmutter (8, 8') eine innenliegende Stabdichtung (12, 12', 19) mit einem elastischen Dichtring aufweist, der im eingeschraubten Zustand des Zugstabes (7) an dessen glattzylindrischer Außenfläche (7a) dichtend anliegt, und dass die Dichtmutter (8, 8') gegenüber dem Ankerkopf (1) mittels einer daran anliegenden elastischen Dichtung (13, 16, 19) abgedichtet ist und die Gewindebohrung (4) an ihrem inneren Bohrungsende dicht geschlossen oder verschlossen ist.

2. Stabanker nach Anspruch 1, **dadurch gekennzeichnet, daß** die Dichtmutter als Kontermutter (8) ausgeführt und mit einem Mutterinnengewinde (9) auf das Außengewinde (5) des Zugstabes (7) aufgeschraubt ist und daß die Stabdichtung (12, 12') in einem an das Mutterinnengewinde (9) anschließenden Mutterfortsatz (8a) angeordnet ist.

3. Stabanker nach Anspruch 1, **dadurch gekennzeichnet, daß** der Dichtring ein O-Dichtring (12') ist.

4. Stabanker nach Anspruch 1, **dadurch gekennzeichnet, daß** der Dichtring ein Flachdichtring (12) ist.

5. Stabanker nach Anspruch 1, **dadurch gekennzeichnet, daß** die Stabdichtung eine den Raum zwischen einem Mutterfortsatz (8a') der Dichtmutter (8') und dem Zugstab (7) ausfüllende elastische Quetschdichtung (19) ist.

6. Stabanker nach Anspruch 2, **dadurch gekennzeichnet, daß** zwischen den Stirnseiten des Ankerkopfes (1) und der Kontermutter (8) eine Schicht (13) aus einem Dichtungslack angeordnet ist.

7. Stabanker nach Anspruch 2, **dadurch gekennzeichnet, daß** in einer stirnseitigen Ringausnehmung (15) der Kontermutter (8) oder des Ankerkopfes (1) ein Dichtring (16) angeordnet ist.

8. Stabanker nach Anspruch 1, **dadurch gekennzeichnet, daß** die Gewindebohrung (4) als Sacklochbohrung ausgeführt ist.

9. Stabanker nach Anspruch 1, **dadurch gekennzeichnet, daß** die Gewindebohrung (4) mit einer am Gewindeauslauf angeordneten Dichtscheibe (14) verschlossen ist.

10. Stabanker nach Anspruch 1, **dadurch gekennzeichnet, daß** in der Gewindebohrung (4) stirnseitig vor dem Zugstabende (6) ein verformbarer elastischer Dichtstopfen (17) angeordnet ist.

11. Stabanker nach Anspruch 1, **dadurch gekennzeichnet, daß** die Dichtmutter (8') auf ein Außengewinde (18) des Ankerkopfes (1) aufgeschraubt ist.

12. Stabanker nach Anspruch 11, **dadurch gekennzeichnet, daß** die Gewindeverbindung (9',18) zwischen der Dichtmutter (8') und dem Ankerkopf (1) als dichtendes Rundgewinde ausgeführt ist.

## Claims

1. Bar anchor for tension bars (7) with an anchor head (1) having a threaded bore (4), into which a tension bar end (6) with an external thread (5) of a tension bar (7) can be screwed, **characterised in that** an end-face sealing nut (8, 8') adjoining the anchor head (1) has an internally lying bar seal (12, 12', 19) with an elastic packing ring which, when the tension bar (5) is in the screwed-in state, lies sealingly against the smooth cylindrical external face (7a) thereof and the sealing nut (8, 8') is sealed off from the anchor head (1) by means of an elastic seal (13, 16, 19) lying thereon and the threaded bore (4) is sealingly closed or sealed at its inner bore end.

2. Bar anchor as claimed in claim 1, **characterised in that** the sealing nut is a locking nut (8) and is screwed onto the external thread (5) of the tension bar (7) by a nut internal thread (9) and the bar seal (12, 12') is disposed in a nut projection (8a) adjoining the nut internal thread (9).

3. Bar anchor as claimed in claim 1, **characterised in that** the packing ring is an O-ring (12').

4. Bar anchor as claimed in claim 1, **characterised in that** the packing ring is a flat gasket (12).

5. Bar anchor as claimed in claim 1, **characterised in that** the bar seal is an elastic pressure seal (19) filling the space between a nut projection (8a') of the sealing nut (8') and the tension bar (9).

6. Bar anchor as claimed in claim 2, **characterised in that** a layer (13) of a sealing varnish is disposed between the end faces of the anchor head (1) and the locking nut (8).

7. Bar anchor as claimed in claim 2, **characterised in that** a packing ring (16) is disposed in an end-face annular recess (15) of the locking nut (8) or the anchor head (1).

8. Bar anchor as claimed in claim 1, **characterised in that** the threaded bore (4) is a blind bore.

9. Bar anchor as claimed in claim 1, **characterised in that** the threaded bore (4) is sealed with a gasket (14) disposed on the thread lead-out.

10. Bar anchor as claimed in claim 1, **characterised in that** a deformable elastic sealing plug (17) is disposed in the threaded bore (4) at the end face in front of the tension bar end (6).

11. Bar anchor as claimed in claim 1, **characterised in that** the sealing nut (8') is screwed onto an external thread (18) of the anchor head (1).

12. Bar anchor as claimed in claim 11, **characterised in that** the thread connection (9', 18) between the sealing nut (8') and the anchor head (1) is a round sealing thread.

## Revendications

1. Ancrage de tirants (7) comprenant une tête d'ancrage (1) comprenant un perçage fileté (4) dans lequel on peut visser une extrémité (6) d'un tirant (7) dotée d'un filetage extérieur (5),
**caractérisé**
**en ce qu'**un écrou d'étanchéité (8, 8') frontalement adjacent à la tête d'ancrage (1) présente une garniture intérieure d'étanchéité (12, 12', 19) de tirant comprenant une bague élastique d'étanchéité qui, lorsque le tirant (7) est vissé, s'applique de façon étanche sur la surface extérieure (7a) cylindrique et lisse du tirant (7), et
**en ce que** l'écrou d'étanchéité (8, 8') est rendu étanche par rapport à la tête d'ancrage (1) au moyen d'une garniture élastique d'étanchéité (13, 16, 19) s'appliquant sur cette tête d'ancrage et où le perçage fileté (4) est fermé ou obturé de façon étanche au niveau de son extrémité intérieure de perçage.

2. Ancrage selon la revendication 1, **caractérisé en ce que** l'écrou d'étanchéité est conçu comme un contre-écrou (8) ayant son filetage intérieur d'écrou (9) vissé sur le filetage extérieur (5) du tirant (7) et
**en ce que** la garniture d'étanchéité (12, 12') de tirant est disposée dans un prolongement femelle (8a) adjacent au filetage intérieur d'écrou (9).

3. Ancrage selon la revendication 1, **caractérisé en ce que** la bague d'étanchéité est un joint torique d'étanchéité (12').

4. Ancrage selon la revendication 1, **caractérisé en ce que** la bague d'étanchéité est un joint annulaire plat d'étanchéité (12).

5. Ancrage selon la revendication 1, **caractérisé en ce que** la garniture d'étanchéité est un joint élastique écrasé (19) remplissant l'espace compris entre un prolongement femelle (8a') de l'écrou d'étanchéité (8') et le tirant (7).

6. Ancrage selon la revendication 2, **caractérisé en ce qu'**une couche (13) de peinture hydrofuge est appliquée entre les faces frontales de la tête d'ancrage (1) et du contre-écrou (8).

7. Ancrage selon la revendication 2, **caractérisé en ce qu'**une bague d'étanchéité (16) est disposée dans un creux annulaire (15) frontal du contre-écrou (8) ou de la tête d'ancrage (1).

8. Ancrage selon la revendication 1, **caractérisé en ce que** le perçage fileté (4) est réalisé comme un trou borgne.

9. Ancrage selon la revendication 1, **caractérisé en ce que** le perçage fileté (4) est obturé avec un disque d'étanchéité (14) disposé à la fin du filetage.

10. Ancrage selon la revendication 1, **caractérisé en ce qu'**un bouchon d'étanchéité (17) élastique et déformable est disposé dans le perçage fileté (4), frontalement devant l'extrémité (6) du tirant.

11. Ancrage selon la revendication 1, **caractérisé en ce que** l'écrou d'étanchéité (8') est vissé sur un filetage extérieur (18) de la tête d'ancrage (1).

12. Ancrage selon la revendication 11, **caractérisé en ce que** l'assemblage par filetage (9', 18) entre l'écrou d'étanchéité (8') et la tête d'ancrage (1) est réalisé sous forme d'un filet rond d'étanchéité.
